# EUROPEAN PATENT SPECIFICATION

(11) **EP 2 863 755 B1**
(45) Date of publication and mention of the grant of the patent: **12.09.2018**
(21) Application number: 13731781.4
(22) Date of filing: 26.06.2013
(51) Int. Cl.: A23C 9/13

(54) **FERMENTED MILK PRODUCT**
FERMENTIERTES MILCHPRODUKT
PRODUIT DE LAIT FERMENTÉ

(30) Priority: 26.06.2012 EP 12173621; 26.06.2012 US 201261664484 P
(43) Date of publication of application: 29.04.2015
(73) Proprietor: DuPont Nutrition Biosciences ApS, 1411 Copenhagen K (DK)
(72) Inventor: LAURIDSEN, Kirsten, DK-7100 Vejle (DK)
(74) Representative: DuPont EMEA
(86) International application number: PCT/EP2013/063385
(87) International publication number: WO 2014/001389

(56) References cited:
- EP-A1- 1 369 041
- JP-A- 2010 200 636
- JP-A- 2012 010 626
- US-A1- 2005 026 999
- KIP P ET AL: "Inulins improve sensoric and textural properties of low-fat yoghurts", INTERNATIONAL DAIRY JOURNAL, ELSEVIER APPLIED SCIENCE, BARKING, GB, vol. 16, no. 9, 1 September 2006 (2006-09-01), pages 1098-1103, XP024963314, ISSN: 0958-6946, DOI: 10.1016/J.IDAIRYJ.2005.10.011 [retrieved on 2006-09-01]
- ALTING A C ET AL: "Improved creaminess of low-fat yoghurt: The impact of amylomaltase-treated starch domains", FOOD HYDROCOLLOIDS, ELSEVIER BV, NL, vol. 23, no. 3, 1 May 2009 (2009-05-01), pages 980-987, XP025573974, ISSN: 0268-005X, DOI: 10.1016/J.FOODHYD.2008.07.011 [retrieved on 2008-07-23]
- DE WIJK R ET AL: "Perceived creaminess of semi-solid foods", TRENDS IN FOOD SCIENCE AND TECHNOLOGY, ELSEVIER SCIENCE PUBLISHERS, GB, vol. 17, no. 8, 1 August 2006 (2006-08-01) , pages 412-422, XP027935140, ISSN: 0924-2244 [retrieved on 2006-08-01]

## Description

### FIELD OF THE INVENTION

The present invention relates to a fermented milk product such as a non-fat or low-fat fermented milk product, such as stirred yogurt and drinking yogurt, and a method for preparing a fermented milk product, and use of an unsaturated emulsifier for improving characteristics of a low-fat fermented milk product.

### BACKGROUND OF THE INVENTION

Fermented milk products include dairy foods that have been fermented using lactic acid bacteria such as *Lactobacillus* and *Lactococcus.* The fermentation process converts carbohydrate into lactic acid, which increases the shelf-life of the product, as well as enhancing the taste and improving the digestibility of milk. Cheese, yogurt, sour cream and creme fraiche are examples of such products.

Yoghurt is a traditional product consumed widely since ancient times. It is now very popular as a snack food or beverage especially in the form of low calorie yogurt. Yoghurt has been attributed with a variety of health properties. Apart from the benefits of an easily digested quantity of high quality protein and the benefits attributed to the consumption of large numbers of lactic acid producing micro-organisms, and the products of their metabolism, yoghurt, along with many dairy products, is an important source of calcium in the human diet.

Non-fat or low-fat fermented milk products having low calorie content are popular; however, fermented milk products that maintain a flavour, body and the texture of fat are desired. Especially non-fat or low-fat yogurt are lacking fat sensation as well as being more acidic and/or bitter than full-fat yogurt.

Presently, in order to maintain the flavour, body and texture of fat of fermented milk products, gelatin, starch, milk protein and/or pectin have been used for texture building in order to compensate for the lack of fat. This is claimed to give a fatty impression, although it is believed that the fatty impression comes from the fact that the product presents a higher level of texture.

WO03/103410 relates to a gelatine free dairy dessert comprising less than 10 w/w% fat and an unsaturated emulsifier.

US 2005/0026999 relates to compositions comprising lactic acid esters of mono- and diglycerides of fatty acids i. e. LACTEM compositions. A low fat yogurt made with pectin and containing LACTEM is described. It also relates to LACTEM including unsaturated fatty acid(s) (called unsaturated LACTEM). It further relates to an emulsifier comprising unsaturated LACTEM and to the use of unsaturated LACTEM to improve firmness, volume and/or texture of products and to food and non-food products containing unsaturated LACTEM.

It is an object of the present invention to provide a method for preparing a non-fat or low-fat fermented milk product having increased fat sensation, increased cream flavor, decrease in acidity perception, and/or decrease in powdery sensory.

It is a further object to obtain these improved characteristics without a decrease in measured viscosity or sensory viscosity.

### SUMMARY OF THE INVENTION

The invention is defined by the subject-matter of the claims.

Described herein is that it is possible to obtain a fermented milk product having improved characteristics such as an increased fat sensation, increased cream flavor, decreased acidity perception, and/or decrease in powdery sensory by adding an unsaturated emulsifier. The unsaturated emulsifier is added in an amount of 0.01-0.19 w/w %, such as 0.05-0.19 w/w %, preferably in an amount of 0.01-0.15 w/w %. Described herein is that characteristics such as perceived acidity and/or an increased fat sensation are especially improved. It has further been found that in some embodiments this may be achieved without a decrease in measured viscosity or sensory viscosity.

Described herein is that it is possible to obtain a fermented milk product having improved characteristics such as an increased fat sensation, increased cream flavour, decreased acidity perception, and/or decrease in powdery sensory by adding mono- and diglyceride(s) of unsaturated fatty acid(s). The mono- and diglyceride(s) of unsaturated fatty acid(s) is added in an amount of 0.01-0.19 w/w %, such as in an amount of 0.05-0.19 w/w %, preferably in an amount of 0.01-0.15 w/w %. Described herein is that characteristics such as perceived acidity and/or an increased fat sensation are especially improved. It has further been found that in some embodiments this may be achieved without a decrease in measured viscosity or sensory viscosity.

So, in a first aspect the present invention relates to a fermented milk product comprising an unsaturated emulsifier in an amount of 0.01-0.19 w/w % such as in an amount of 0.05-0.19 w/w %, wherein the fermented milk product comprises at least 0.3 w/w % fat, wherein the unsaturated emulsifier comprises at least 30 w/w % of mono- and diglycerides of unsaturated fatty acid(s).

Described herein is a method for preparing a fermented milk product having an increased fat sensation by adding an unsaturated emulsifier in an amount of 0.01-0.19 w/w % such as in an amount of 0.05-0.19 w/w % to a milk product such as a yogurt milk.

In a second aspect, the present invention relates to a method for preparing a fermented milk product having a decreased acidity perception by adding an unsaturated emulsifier comprising at least 30 w/w % of mono- and diglycerides of unsaturated fatty acid(s) in an amount of 0.01-0.19 w/w % such as in an amount of 0.05-0.19 w/w % to a milk product such as a yogurt milk, and wherein the fermented milk product comprises at least 0.3 w/w % fat.

Described herein is a method for preparing a fermented milk product having an increased fat sensation and a decreased acidity perception by adding an unsaturated emulsifier in an amount of 0.01-0.19 w/w % such as in an amount of 0.05-0.19 w/w % to a milk product such as a yogurt milk.

In a third aspect, the present invention relates to use of an unsaturated emulsifier comprising at least 30 w/w % of mono- and diglycerides of unsaturated fatty acid(s) in an amount of 0.01-0.19 w/w % for decreasing acidity perception, in a fermented milk product comprising at least 0.3 w/w % fat.

### DETAILED DISCLOSURE OF THE INVENTION

In one aspect disclosed herein, the present invention relates to a fermented milk product comprising an unsaturated emulsifier in an amount of 0.01-0.19 w/w % such as in an amount of 0.05-0.19 w/w %, wherein the fermented milk product comprises at least 0.3 w/w % fat, wherein the unsaturated emulsifier comprises at least 30 w/w % of mono- and diglycerides of unsaturated fatty acid(s).

The fermented milk product comprises at least 0.3 w/w % fat, such as at least 0.4 w/w % fat, such as at least 0.5% w/w % fat. In a further aspect, the fermented milk product comprises between 0.3 and 15 w/w % fat, such as between 0.3 and 10 w/w % fat or between 0.3 and 8 w/w % fat or between 0.3 and 6 w/w % fat or between 0.4 and 6 w/w % fat, or between 0.4 and 4 w/w % fat or between 0.4 and 2 w/w % fat or between 0.4 and 1.8 w/w % fat.

The term "fat" may be any type of fat, and includes e.g. vegetable fat, milk fat or combinations thereof. Non-limiting examples of milk fat are e.g. butter, cream, butter concentrate, butter oil and fractionated butter. Vegetable fat can e.g. be palm fat, palm kernel fat, coconut fat, or combination of two or more thereof, and may be of natural origin (non-hardened), or (partially) hardened. When the product is a yogurt the fat is usually milk fat such as cream.

As used herein, the term "fermented milk product" refers to a food product made by fermentation of a dairy substrate using at least one species of lactic acid bacteria, such as Lactobacillus, Lactococcus, Leuconostoc, Streptococcus thermophilus, Lactobacillus bulgaricus, Lactobacillus lactic, Leuconostoc mesenteroides subs. lactis, Lactococcus lactis subsp. Cremoris, Lactococcus lactis subsp. Lactis, Lactococcus lactis subsp. lactis biovar. diacetylactis. The lactic acid bacteria are responsible for the production of lactic acid from lactose.

In some embodiments, the products have a low pH (*e.g.,* a pH of about 3 to about 6.0).

In one aspect, the fermented milk product has a pH between 3-5. In yet a further aspect, the fermented milk product has a pH of 3.5-4.6.

In some preferred embodiments, the products contain lactic acid.

Fermented milk products are provided in any form, including frozen, liquid or solid form. In some embodiments, the products contain living bacteria, while in some alternative embodiments, no living bacteria are present. Fermented milk products include, but are not limited to cheese, yogurt, sour cream, creme fraiche, and fermented milk beverages.

Described herein is a method for preparing a fermented milk product having an increased fat sensation and/or a decreased acidity perception by adding an unsaturated emulsifier in an amount of 0.01-0.19 w/w % such as in an amount of 0.05-0.19 w/w% to a milk product such as a yogurt milk.

Described herein is a method for preparing a fermented milk product having an increased fat sensation by adding an unsaturated emulsifier in an amount of 0.01-0.19 w/w % such as in an amount of 0.05-0.19 w/w% to a milk product such as a yogurt milk.

The present invention relates to a method for preparing a fermented milk product having a decreased acidity perception by adding an unsaturated emulsifier comprising at least 30 w/w % of mono- and diglycerides of unsaturated fatty acid(s) in an amount of 0.01-0.19 w/w % such as in an amount of 0.05-0.19 w/w% to a milk product such as a yogurt milk, and wherein the fermented milk product comprises at least 0.3 w/w % fat.

Described herein is a method for preparing a fermented milk product having an increased fat sensation and/or a decreased acidity perception by adding mono- and diglycerides of unsaturated fatty acid(s) such as in an amount of 0.01-0.19 w/w % to a milk product such as a yogurt milk.

Described herein is a method for preparing a fermented milk product having an increased fat sensation by adding mono- and diglycerides of unsaturated fatty acid(s) such as in an amount of 0.01-0.19 w/w % to a milk product such as a yogurt milk.

In general the usual ingredients of the milk product are first mixed, and then optionally homogenized and/or pasteurised, and fermented under suitable conditions, known by the person skilled in the art, to obtain the desired fermented milk product. In one embodiment, the emulsifier is added to the milk before homogenization, pasteurization and/or fermentation. In one embodiment, the emulsifier is added to the milk before homogenization, pasteurization and fermentation.

In a particular embodiment, the milk product is fermented between 20 °C to 43 °C for a period of 5 to 10 h until reaching a pH of 4.7 to 4.2. The fermented milk product thus obtained is subsequently cooled and stored at this temperature until its consumption. The storage temperature is generally set at 4-6 °C but a break in the cold chain can occur especially in areas wherein storage in cold, dry and constant temperature is difficult.

The fermented milk product can be in a liquid or solid form such as yogurt, stirred yogurt, set yogurt, yogurt like drink, bitter milk, butter milk, sour cream, fresh cheese and cheese. Preferably, the fermented milk product is selected from the group consisting of yogurt, stirred yogurt, set yogurt, and yogurt like drink. In one aspect, disclosed herein the fermented milk product is a yogurt. In one aspect, disclosed herein the fermented milk product is a drinking yogurt. In one aspect, disclosed herein the fermented milk product is a stirred yogurt.

In the aspect wherein the fermented milk product is a yogurt, it can further comprise other microorganisms commonly used in yogurt manufacture such as Streptococcus thermophilus and/or Lactobacillus bulgaricus, and present a pH of 4.2 to 4.6.

The milk product can comprise either mammal milk, such as cow's milk, goat's milk or sheep's milk, and/or plant milk, such as soy milk. In one aspect, the milk product comprises skimmed milk. In one aspect, the milk product comprises skimmed milk in an amount of at least 90%, such as at least 92%, at least 94%, at least 96%, or at least 97%. In a further aspect, the milk product comprises cream. The amount of cream added may depend on the desired amount of fat in the milk product.

In the present context a "yoghurt milk" is a liquid milk-based starting material for the preparation of yoghurt or a yoghurt drink. The yoghurt milk traditionally comprises casein and whey proteins in the weight ratios between 90:10 casein:whey protein to 20:80, preferably 90:10 to 50:50.

Yoghurt milks are converted to yoghurt or yoghurt drinks by acidification, usually using a bacterial culture.

A "yoghurt" (yogurt) is an acidic and fermented food prepared from a dairy source and viable food approved micro-organisms. Yoghurt possesses gel-like textural attributes. For the purposes of this invention, yoghurt also refers to yoghurt-like products that may include non-dairy derived lipids, flavourings and food-approved stabilisers, acids, plant derived additions and texturizers. Heat treated yoghurt and yoghurt-like products are also included by the term yoghurt. Petit Suisse is also contemplated when referring to yoghurt. Preferably, the yoghurt is a fermented food prepared from a dairy source and viable food approved micro-organisms.

A "yoghurt drink" is an acidic or fermented food prepared from a dairy source and viable microorganisms. Yoghurt drinks possess viscous, cream-like textural attributes and are widely known as drinking yoghurt. For the purposes of this invention yoghurt drinks also refer to yoghurt-like drinkable products that may include non-dairy derived lipids, flavourings and food-approved stabilisers, acids and texturizers. Heat treated drinking yoghurt products are also included by the term drinking yoghurt. Generally drinking yoghurts have a lower protein content that regular yoghurts. More specifically, drinking yoghurts have protein contents generally <2.5% w/w and typically about 2.0% w/w protein or less. Preferably, the yoghurt drink is a fermented food product prepared from a dairy source and viable micro-organisms.

It is contemplated that products falling under the scope of the Codex standard for fermented milks (CODEX Standard 243-2003, and incorporated hereby by reference) are included as either yoghurts or yoghurt drinks.

The term "unsaturated emulsifier" is well known in the art. Such emulsifiers are derived from unsaturated fats and generally constitute a mixture of mono- and diglycerides of unsaturated fatty acids with glycerol. Examples of commercially available unsaturated emulsifier preparations are, e.g., the emulsifiers GRINDSTED PS 217/B, DIMODAN RT PEL/B, DIMODAN ST., of Danisco, Denmark, GRINDSTED Mono Di SL60 of Danisco, Denmark and Myverol 18-35K, 18-92K and 18-50XL PL of Kerry, The Netherlands, or combinations of two or more thereof. Generally, such commercial unsaturated emulsifier preparations may also comprise substantial amounts of other substances, but usually at least 20 % (w/w) of the preparations are composed of unsaturated emulsifier, but higher amounts are also common. The monoglycerides may be based on hardened or partially hardened oil, for example rapeseed or palm oil. In some aspects, the unsaturated emulsifier contains trans fatty acids since especially when it is fully or partly based on partially hardened oil, where some of the originally cis-double bonds are converted to trans double bonds during the partially hardening process. The unsaturated fatty acid(s) may be derived from oils and/or fats of vegetable and/or animal origin.

In one aspect, said fatty acid(s) is selected from the group consisting of myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, and a mixture of said fatty acid(s).

The unsaturated emulsifier comprises at least 30 w/w % of mono- and diglycerides of unsaturated fatty acid(s), such as at least 40 w/w % of mono- and diglycerides of unsaturated fatty acid(s) or such as at least 50 w/w % of mono- and diglycerides of unsaturated fatty acid(s).

In another preferred aspect, the unsaturated emulsifier is mono- and diglycerides of unsaturated fatty acid(s).

In yet a preferred aspect, at least 50 w/w% of the mono- and diglycerides of unsaturated fatty acid(s) are in the *cis* form, such as at least 55 w/w% of the mono- and diglycerides of unsaturated fatty acid(s) are in the *cis* form or such as at least 57 w/w% of the mono- and diglycerides of unsaturated fatty acid(s) are in the *cis* form.

The emulsifier GRINDSTED PS217/B contains about 32% of unsaturated monoglyceride.

The unsaturated emulsifier is usually added as a powder optionally containing, for example, a flow agent such as Silicon dioxide.

The fermented milk product as described herein comprises the unsaturated emulsifier in an amount of 0.01-0.19 w/w%, or in an amount of 0.05-0.19 w/w%, or in an amount of 0.05-0.18 w/w%, or in an amount of 0.05-0.16 w/w%, or in an amount of 0.08-0.15 w/w%, or in an amount of 0.08-0.13 w/w%, or in an amount of 0.1-0.15 w/w%, or in an amount of 0.1-0.13 w/w%. In a further aspect, the product comprises the unsaturated emulsifier in an amount of 0.1 w/w%. In a further aspect, the product comprises the unsaturated emulsifier in an amount of 0.01-0.1, such as in an amount of 0.01-0.02 w/w%.

The fermented milk product as described herein comprises mono- and diglycerides of unsaturated fatty acid(s) in an amount of 0.01-0.19 w/w%, or in an amount of 0.05-0.19 w/w%, or in an amount of 0.05-0.18 w/w%, or in an amount of 0.05-0.16 w/w%, or in an amount of 0.08-0.15 w/w%, or in an amount of 0.08-0.13 w/w%, or in an amount of 0.1-0.15 w/w%, or in an amount of 0.1-0.13 w/w%. In a further aspect, the product comprises mono- and diglycerides of unsaturated fatty acid(s) in an amount of 0.1 w/w%. In a further aspect, the product comprises mono- and diglycerides of unsaturated fatty acid(s) in an amount of 0.01-0.1 such as in an amount of 0.01-0.02 w/w%.

The following examples illustrating the present invention represent specific embodiments of the invention and are not intended as limiting the scope of the invention.

### EXAMPLES

### Methods

The fat sensation, cream flavour, decrease in acidity (perception), decrease in powdery sensory were measured through a double blind sensory evaluation by a panel of 6 or 7 trained panellists to describe the texture of flavour of stirred yogurt through descriptive analysis method.

| **UK** | **Definition** |
|---|---|
| **Acidic** | Intensity of acidity |
| **Fat sensation** | Intensity of fat sensation |
| **Cream flavour** | Intensity of cream flavour |
| **Powdery/dry** | Intensity of drying powder taste |

The viscosity is measured using a Brookfield viscometer.

### EXAMPLE 1

Yogurt stirred were prepared with the following constituents:

**Table 1:**

| | Yogurt with 0.5% fat | Yogurt with 1.5% fat |
|---|---|---|
| Skimmed milk | 97.996 | 95.766 |
| Cream, 38% fat | 0.604 | 3.334 |
| Sodium caseinate | 0.300 | 0.300 |
| Whey protein concentrate, 80% protein | 1.000 | 0.500 |
| GRINDSTED PS 217/B | 0.10 | 0.10 |
| YO-MIX 860 FRO* | + | + |
| Total | 100.00 | 100.00 |

| | | |
|---|---|---|
| *YO-MIX 860 FRO is starter culture (dosage 20 DCU/100 I of milk) | | |

The procedure followed was as described below:
1- Mix all powder ingredients and add the dry blend to the milk under good agitation
2- Homogenise at 65°C/200 bar
3- Pasteurise 95°C for 6 minutes
4- Cool to the fermentation temperature of 43°C
5- Inoculate with the starter culture YO-MIXTM 860 FRO in a dosage of 20 DCU/100 I
6- Ferment to pH 4.60
7- Stir and cool on plate heat exchanger to 24°C
8- Fill and store at 5°C

### EXAMPLE 2

The following stirred yogurts were prepared by the procedure described in example 1 and tested for intensity of acidity (acidic), intensity of fat sensation (fat sensation), intensity of cream flavour (cream flavour) and intensity of drying powder taste (powdery/dry).

**Table 2:**

| **Ingredient name** | **1** | **2** | **3** | **4** | **5** | **6** |
|---|---|---|---|---|---|---|
| Skimmed milk | 98.426 | 98.589 | 97.832 | 97.996 | 95.603 | 95.766 |
| Cream, 38% fat | 0.274 | 0.011 | 0.868 | 0.604 | 3.597 | 3.334 |
| Sodium caseinate | 0.300 | 0.300 | 0.300 | 0.300 | 0.300 | 0.300 |
| Whey protein concentrate, 80% protein | 1.000 | 1.000 | 1.000 | 1.000 | 0.500 | 0.500 |
| GRINDSTED PS 217/B | | 0.10 | | 0.10 | | 0.10 |
| YO-MIX 860 FRO* | + | + | + | + | + | + |
| Total | 100.00 | 100.00 | 100.00 | 100.00 | 100.00 | 100.00 |

| **Calculations** | **1** | **2** | **3** | **4** | **5** | **6** |
|---|---|---|---|---|---|---|
| Total Fat | 0.28 | 0.28 | 0.50 | 0.50 | 1.50 | 1.50 |
| Total MSNF | 10.04 | 10.04 | 10.02 | 10.02 | 9.53 | 9.53 |
| Total dry matter | 10.31 | 10.31 | 10.52 | 10.51 | 11.03 | 11.02 |
| Total carbohydrate | 4.67 | 4.67 | 4.66 | 4.66 | 4.62 | 4.62 |
| Total protein | 4.52 | 4.52 | 4.51 | 4.51 | 4.10 | 4.10 |

| **Analytical measurements** | **1** | **2** | **3** | **4** | **5** | **6** |
|---|---|---|---|---|---|---|
| Viscosity, cP** | 4700 | 4700 | 4800 | 5300 | 3600 | 3700 |
| Polyvisc, mm/15 sec | 64 | 59 | 59 | 60 | 69 | 66 |
| pH | 4.27 | 4.28 | 4.27 | 4.29 | 4.28 | 4.28 |
| Syneresis, 30 min | 30.7 | 28.1 | 30.4 | 25.9 | 30.9 | 28.9 |
| Titer, ml NaOH/100 ml yogurt | 26.0 | 26.5 | 26.2 | 26.8 | 27.8 | 26.2 |

| **Sensory evaluation***** | **1** | **2** | **3** | **4** | **5** | **6** |
|---|---|---|---|---|---|---|
| Acidity | 8.52 A | 8.97 A | 8.94 A | 8.18 A | 7.08A | 4.07B |
| Fat sensation | 6.15 D | 6.13 D | 5.96 D | 7.29CD | 8.21BC | 10.14AB |
| Cream Flavour | 4.7 C | 3.65 C | 4.5 C | 3.98 C | 8.61 B | 10.56 AB |
| Powdery/dry | 8.07 A | 8.91 A | 7.67 A | 8.41 A | 4.51 B | 3.63 B |

| | | | | | | |
|---|---|---|---|---|---|---|
| *dosage 20 DCU/100 I of milk.** Brookfield, spindle S25, speed 30 RPM, time 30 sec, temperature 5°C. *** The fat sensation, cream flavour, decrease in acidity, decrease in powdery sensory were measured through a double blind sensory evaluation by a panel of 6 trained panellists to describe the texture of flavour of stirred yogurt through descriptive analysis method. | | | | | | |

A, B, C, D refer to statistical grouping.

From the above table 2 it appears that the addition of 0.1 % of the unsaturated emulsifier GRINDSTED PS217/B provides the following functionality in stirred yogurt:
- No decrease in measured viscosity or sensory viscosity
- Increase in fat sensation for yogurts with 0.5% and 1.5% fat containing unsaturated emulsifier when compared with yogurts with same fat content and without addition of the emulsifier.
- Increase in cream flavour for yogurt with 1.5% fat
- Decrease in acidity for yogurts with 0.5% and 1.5% fat containing unsaturated emulsifier when compared with yogurts with same fat content and without addition of the emulsifier.
- Decrease in powdery for yogurt with 1.5% fat containing unsaturated emulsifier. No effect seen of unsaturated emulsifier in this trial for yogurt with 0.3% fat.

### EXAMPLE 3

The following stirred yogurts were prepared by the procedure described in example 1 and tested for intensity of acidity (acidic), intensity of fat sensation (fat sensation), intensity of cream flavour (cream flavour) and intensity of drying powder taste (powdery/dry). The emulsifier used is DIMODAN® MO90 comprising distilled monoglyceride :

**Table 3a:**

| **Ingredients in %** | | | |
|---|---|---|---|
| **Ingredient Name** | **Yogurt with 3% fat without DIMODAN® MO90** | **Yogurt with 1.5% fat without DIMODAN® MO90** | **Yogurt with 1.5% fat with DIMODAN® MO90** |
| Skimmed milk | 91.896 | 95.909 | 95.893 |
| Whey powder concentrate (80% prot) | 0.777 | 0.707 | 0.708 |
| Butter oil (AMF) | 0.100 | 0.100 | 0.100 |
| Cream 38 % fat | 7.226 | 3.283 | 3.283 |
| YO-MIX™ 860 FRO* | + | + | + |
| DIMODAN® MO 90 | | | 0.016 |
| Total % | **100** | **100** | **100** |

**Table 3b:**

| **Calculations** | **1** | **2** | **5** |
|---|---|---|---|
| Total Fat | 3.00 | 1.50 | 1.50 |
| Total MSNF | 9.21 | 9.31 | 9.31 |
| Total Dry Matter | 12.39 | 11.00 | 11.02 |
| Total Carbohydrate | 4.68 | 4.76 | 4.76 |
| Total Protein | 4.00 | 4.00 | 4.00 |

| | | | |
|---|---|---|---|
| * dosage 20 DCU / 100 l of milk | | | |

**Table 3c:**

| **Sensory evaluation**** | | | | |
|---|---|---|---|---|
| **Sensory parameter** | **Sensory desciption** | **Yogurt with 3% fat without DIMODAN® MO90** | **Yogurt with 1.5% fat without DIMODAN® MO90** | **Yogurt with 1.5% fat with DIMODAN® MO90** |
| Acidity | Level of acidic taste in mouth | 8.3 - C | 10.1 - A | 8.18 - C |
| Cream | Level of flavour from dairy cream in mouth | 5.51 - A | 3.15 - C | 5.1 - A |
| Fat perception | Level of fat texture in mouth | 10.57 - A | 7.11 - C | 8.49 - B |
| Astrigent/dry | Level of dryness after swallowing in mouth | 6.47 - C | 8.47 - A | 6.77 - C |

| | | | | |
|---|---|---|---|---|
| ** The sensory parameters acidity, cream, fat perception and astringent/dry were measured through sensory evaluation by a panel 7 trained panellists to describe the texture and flavour of stirred yogurt through analysis method. The sensory evaluation was repeated 6 times. A, B & C refer to statistical grouping. Acidity is significant at 0.1% Cream is significant at 1% Fat perception is significant at 0.1% Astrigent/dry is significant at 0.1% | | | | |

From the above table 3 a-c it appears that reducing the fat content from 3% to 1.5% will give yogurt, which is more acidic (less mild in flavour), has less cream flavour and less fat texture, and dryness level is increased, all of this due to less amount of fat.

Addition of DIMODAN MO 90 into yogurt with 1.5% will decrease the acidic level to a similar level as seen with a yogurt with 3% fat, increase the cream flavour to a similar level as with 3% fat, increase the fat texture towards that of higher fat content, but not on similar level as with 3% fat and reduce the dryness to a similar level as with 3% fat. So all in all addition of DIMODAN MO 90 into yogurt with less fat will adjust the sensory parameters to that of yogurt with higher fat content.

## Claims

1. A fermented milk product comprising an unsaturated emulsifier in an amount of 0.01-0.19 w/w %, wherein the fermented milk product comprises at least 0.3 w/w % fat, and wherein the unsaturated emulsifier comprises at least 30 w/w % of mono- and diglycerides of unsaturated fatty acid(s).

2. The fermented milk product according to claim 1, wherein the product comprises the unsaturated emulsifier in an amount of 0.05-0.19 w/w %.

3. The fermented milk product according to any one of claims 1-2, wherein the unsaturated emulsifier comprises at least 40 w/w % of mono- and diglycerides of unsaturated fatty acid(s).

4. The fermented milk product according to any one of claims 1-3, wherein at least 50 w/w% of the mono- and diglycerides of unsaturated fatty acid(s) are in the *cis* form or such as at least 55 w/w% of the mono- and diglycerides of unsaturated fatty acid(s) are in the *cis* form or such as at least 57 w/w% of the mono- and diglycerides of unsaturated fatty acid(s) are in the *cis* form.

5. The fermented milk product according to any one of claims 1-4, wherein said unsaturated fatty acid(s) are derived from oils and/or fats of vegetable and/or animal origin.

6. The fermented milk product according to any one of claims 1-5, wherein the product is a yogurt.

7. The fermented milk product according to claim 6, wherein the yogurt is a drinking yogurt or a stirred yogurt.

8. A method for preparing a fermented milk product as defined in any one of claims 1-7 having a decreased acidity perception by adding an unsaturated emulsifier comprising at least 30 w/w % of mono- and diglycerides of unsaturated fatty acid(s) in an amount of 0.01-0.19 w/w % to a milk product such as a yogurt milk, and wherein the fermented milk product comprises at least 0.3 w/w % fat.

9. The method according to claim 8, wherein the emulsifier is added to the milk product before homogenization, pasteurization and fermentation.

10. Use of an unsaturated emulsifier comprising at least 30 w/w % of mono- and diglycerides of unsaturated fatty acid(s) in an amount of 0.01-0.19 w/w % for decreasing acidity perception in a fermented milk product comprising at least 0.3 w/w % fat as defined in any one of claims 1-7.

11. The use according to claim 10, wherein the unsaturated emulsifier is added to the milk product before homogenization, pasteurization and fermentation.

## Patentansprüche

1. Fermentiertes Milchprodukt, umfassend einen ungesättigten Emulgator in einer Menge von 0,01-0,19 w/w-%, wobei das fermentierte Milchprodukt mindestens 0,3 w/w-% Fett umfasst, und wobei der ungesättigte Emulgator mindestens 30 w/w-% Mono- und Diglyceride ungesättigter Fettsäure(n) umfasst.

2. Fermentiertes Milchprodukt gemäß Anspruch 1, wobei das Produkt den ungesättigten Emulgator in einer Menge von 0,05-0,19 w/w-% enthält.

3. Fermentiertes Milchprodukt gemäß einem beliebigen der Ansprüche 1 bis 2, wobei der ungesättigte Emulgator mindestens 40 w/w-% Mono- und Diglyceride ungesättigter Fettsäure(n) umfasst.

4. Fermentiertes Milchprodukt gemäß einem beliebigen der Ansprüche 1 bis 3, wobei mindestens 50 w/w-% der Mono- und Diglyceride ungesättigter Fettsäure(n) in der cis-Form vorliegen oder derart, dass mindestens 55 w/w-% der Mono- und Diglyceride ungesättigter Fettsäure(n) in der cis-Form vorliegen oder dass mindestens 57 w/w-% der Mono- und Diglyceride ungesättigter Fettsäure(n) in der cis-Form vorliegen.

5. Fermentiertes Milchprodukt gemäß einem beliebigen der Ansprüche 1 bis 4, wobei die ungesättigte(n) Fettsäure(n) von Ölen und/oder Fetten pflanzlichen und/oder tierischen Ursprungs abgeleitet sind.

6. Fermentiertes Milchprodukt gemäß einem beliebigen der Ansprüche 1 bis 5, wobei das Produkt ein Joghurt ist.

7. Fermentiertes Milchprodukt gemäß Anspruch 6, wobei der Joghurt ein Trinkjoghurt oder ein gerührter Joghurt ist.

8. Verfahren zur Herstellung eines fermentierten Milchprodukts, wie in einem beliebigen der Ansprüche 1 bis 7 definiert, das eine verminderte Aciditäts-Empfindung aufweist, durch Zusetzen eines ungesättigten Emulgators, der mindestens 30 w/w-% Mono- und Diglyceride ungesättigter Fettsäure(n) umfasst, in einer Menge von 0,01-0,19 w/w-% zu einem Milchprodukt, wie einer Joghurtmilch, und wobei das fermentierte Milchprodukt mindestens 0,3 w/w-% Fett umfasst.

9. Verfahren gemäß Anspruch 8, wobei der Emulgator dem Milchprodukt vor der Homogenisierung, Pasteurisierung und Fermentation zugesetzt wird.

10. Verwendung eines ungesättigten Emulgators, umfassend mindestens 30 w/w-% Mono- und Diglyceride ungesättigter Fettsäure(n) in einer Menge von 0,01-0,19 w/w-% zur Verringerung der Aciditäts-Empfindung in einem mindestens 0,3 w/w-% Fett umfassenden fermentierten Milchprodukt, wie es in einem beliebigen der Ansprüche 1 bis 7 definiert ist.

11. Verwendung gemäß Anspruch 10, wobei der ungesättigte Emulgator dem Milchprodukt vor der Homogenisierung, Pasteurisierung und Fermentation zugesetzt wird.

## Revendications

1. Produit de lait fermenté comprenant un émulsifiant insaturé selon une quantité de 0,01-0,19% p/p, où le produit de lait fermenté comprend au moins 0,3% p/p de matière grasse, et où l'émulsifiant insaturé comprend au moins 30% p/p de mono- et diglycérides d'un ou plusieurs acides gras insaturés.

2. Produit de lait fermenté selon la revendication 1, où le produit comprend l'émulsifiant insaturé selon une quantité de 0,05-0,19% p/p.

3. Produit de lait fermenté selon l'une quelconque des revendications 1-2, où l'émulsifiant insaturé comprend au moins 40% p/p de mono- et diglycérides d'un ou plusieurs acides gras insaturés.

4. Produit de lait fermenté selon l'une quelconque des revendications 1-3, où au moins 50% p/p des mono- et diglycérides d'un ou plusieurs acides gras insaturés se trouvent sous la forme *cis* ou tel qu'au moins 55% p/p des mono- et diglycérides d'un ou plusieurs acides gras insaturés se trouvent sous la forme *cis* ou tel qu'au moins 57% p/p des mono- et diglycérides d'un ou plusieurs acides gras insaturés se trouvent sous la forme *cis.*

5. Produit de lait fermenté selon l'une quelconque des revendications 1-4, où ledit ou lesdits acides gras insaturés sont dérivés d'huiles et/ou de matières grasses d'origine végétale et/ou animale.

6. Produit de lait fermenté selon l'une quelconque des revendications 1-5, où le produit est un yaourt.

7. Produit de lait fermenté selon la revendication 6, où le yaourt est un yaourt à boire ou un yaourt brassé.

8. Méthode de préparation d'un produit de lait fermenté tel que défini selon l'une quelconque des revendications 1-7, ayant une perception réduite de l'acidité par l'addition d'un émulsifiant insaturé comprenant au moins 30% p/p de mono- et diglycérides d'un ou plusieurs acides gras insaturés selon une quantité de 0,01-0,19% p/p, au produit de lait tel qu'un lait de type yaourt, et où le produit de lait fermenté comprend au moins 0,3% p/p de matière grasse.

9. Méthode selon la revendication 8, où l'émulsifiant est ajouté au produit de lait avant homogénéisation, pasteurisation et fermentation.

10. Utilisation d'un émulsifiant insaturé comprenant au moins 30% p/p de mono- et diglycérides d'un ou plusieurs acides gras insaturés selon une quantité de 0,01-0,19% p/p, afin de réduire la perception de l'acidité dans un produit de lait fermenté comprenant au moins 0,3% p/p de matière grasse tel que défini selon l'une quelconque des revendications 1-7.

11. Utilisation selon la revendication 10, où l'émulsifiant insaturé est ajouté au produit de lait avant homogénéisation, pasteurisation et fermentation.
